# FASCICULE DE BREVET EUROPEEN

(11) **EP 2 088 764 B1**
(45) Date de publication et mention de la délivrance du brevet: **06.10.2010**
(21) Numéro de dépôt: 08151281.6
(22) Date de dépôt: 11.02.2008
(51) Int. Cl.: H04N 5/00, H04N 7/16, H04N 7/167, G06F 9/445

(54) **Méthode de mise à jour et de gestion d'une application de traitement de données audiovisuelles incluse dans une unité multimédia au moyen d'un module d'accès conditionnel**
Methode zur Aktualisierung und Verwaltung einer Anwendung für die Verarbeitung von audiovisuellen Daten in einer Multimediaeinheit über ein Modul mit bedingtem Zugriff
Method for updating and managing an application for processing audiovisual data included in a multimedia unit by means of a conditional access module

(43) Date de publication de la demande: 12.08.2009
(73) Titulaire: Nagravision S.A., 1033 Cheseaux-sur-Lausanne (CH)
(72) Inventeur: Nicoulin, André, 1004, Lausanne (CH); Le Buhan, Corinne, 1619, Les Paccots (CH); Philip, Serge c/o SmarDTV, 13704, La Ciotat (FR)
(74) Mandataire: Leman Consulting S.A.

(56) Documents cités:
- EP-A- 1 624 692
- EP-A- 1 811 778
- EP-A- 1 914 990
- EP-B- 1 078 524
- WO-A-2007/120892
- DE-A1-102005 060 288
- DE-B3-102006 016 121
- US-A1- 2003 041 127
- US-A1- 2005 209 970
- US-A1- 2006 200 814
- US-B1- 6 443 361
- ESKICIOGLU A M ET AL: "An overview of multimedia content protection in consumer electronics devices" SIGNAL PROCESSING. IMAGE COMMUNICATION, ELSEVIER SCIENCE PUBLISHERS, AMSTERDAM, NL, vol. 16, no. 7, 1 avril 2001 (2001-04-01), pages 681-699, XP004232133 ISSN: 0923-5965

## Description

### Domaine de l'invention

La présente invention concerne le domaine des unités multimédia comprenant une application de traitement de flux de données audiovisuelles à accès conditionnel diffusées par des émetteurs terrestres, satellites, câble ou via un réseau à large bande et à haut débit de données câblé ou sans fil du type WiFi, Wimax, UMTS etc.

### Arrière plan technique

Les unités multimédia sont définies ici comme des ordinateurs personnels fixes ou portables, des décodeurs de télévision numérique, des téléviseurs ou des téléphones etc. auxquels est connecté un module d'accès conditionnel et de décryption. Plus particulièrement, l'objet de l'invention se situe au niveau de la mise à jour et de la gestion des logiciels aussi bien du module d'accès conditionnel que de l'application de traitement des flux installée dans l'unité multimédia.

De nombreux décodeurs de télévision numérique, ainsi que des téléviseurs avec récepteur numérique intégré et des ordinateurs personnels équipés des interfaces adéquates utilisent pour le contrôle de l'accès aux données numériques audio/vidéo télédiffusées et leur désembrouillage un module d'accès conditionnel CAM (Conditional Access Module). Typiquement, ce module se présente sous la forme d'un boîtier normalisé détachable muni d'un lecteur de carte à puce et d'un connecteur compatible avec une interface de l'ordinateur. Un exemple est décrit dans le brevet US6443361. Un tel module CAM fourni par un opérateur de télévision à péage désembrouille un ou des flux de données audio/vidéo en provenance d'un câble, d'un émetteur terrestre hertzien, d'un satellite, d'un serveur Internet via un réseau de communication câblé ou sans fil (WebTV, IP TV) en fonction de clés ou mots de contrôle reçus de l'élément dédié à l'accès conditionnel. Ce dernier élément, chargé de la sécurité de la décryption des clés de désembrouillage et droits d'accès conditionnel, consiste généralement en une carte à puce ou module de sécurité, insérée dans le lecteur du module d'accès conditionnel CAM, réputée inviolable dans laquelle les droits d'un utilisateur sont stockés. Des messages contenus dans les flux télédiffusés consistant en des messages de contrôle ECM (Entitlement Control message) et des messages d'administration des droits EMM (Entitlement Management Message) sont dirigés vers le module de sécurité qui dispose des clés de transmission nécessaires à la décryption de ces messages. Les mots de contrôle (CW) contenus dans les messages de contrôle ECM sont décryptés puis retournés au module de désembrouillage si et seulement si les droits d'accès conditionnels sont présents et vérifiés par le module de sécurité.

Un module CAM est en général relié à l'unité multimédia hôte via une interface commune DVB-CI (Digital Video Broadcasting - Common Interface) définie par la norme européenne EN50221 "Common Interface Specification for Conditional Access and other Digital Video Broadcasting Decoder Applications" éditée par le CENELEC (Comité Européen de Normalisation Électrotechnique). Ce document décrit une interface commune en normalisant la structure des données, le codage des canaux, les informations de service, l'interface avec l'unité hôte et avec le système d'accès conditionnel. Ce dernier est utilisé pour contrôler l'accès à un service diffusé consistant en un ensemble de flux élémentaires offert à l'utilisateur sous forme d'un programme de télévision par exemple. Selon ce document, le module CAM exécute des applications en communicant avec l'unité hôte et en fournissant à l'utilisateur des fonctionnalités complémentaires à celles incluses dans l'unité hôte telles que le système d'accès conditionnel ou un guide électronique de programmes. Il est en outre compatible au format PCMCIA (Personal Computer Memory Card International Association), USB (Universal Serial Bus) ou autre.

Selon une configuration compacte, le module CAM peut être sous la forme d'un "dongle" ou clé électronique comprenant à la fois le module de sécurité et le module de décryption intégrés dans un ou plusieurs circuits électroniques. Ce "dongle" est connecté à un port de communication de l'ordinateur vers des périphériques externes comme le port parallèle, le port série USB, le port firewire IEEE 1394, etc. Un exemple d'application d'un "dongle" au contrôle d'accès à des données cryptées est décrit dans le document US2007256126.

L'unité multimédia comprend une application particulière du type Windows Media Player, Real Player, VLC Media Player etc. destinée à exploiter ou visionner le contenu des données diffusées obtenues après décodage. Cette application est sécurisée en association avec le module d'accès conditionnel CAM de manière à contrôler les enregistrements, les transferts ou les copies du contenu sur des supports locaux ou distants afin d'éviter les abus. De plus, il n'est pas souhaitable qu'une application tierce permette de traiter les données reçues sans l'autorisation du diffuseur ou de l'opérateur contrôlant l'accès à ces données.

Une norme telle que CableCard (SCTE41 http://www.scte.org) peut être utilisée pour sécuriser le flux de données audio-visuelles entre le module d'accès conditionnel et l'unité multimédia. Une telle solution nécessite néanmoins une gestion rigoureuse et sécurisée des clés et algorithmes au sein de l'unité multimédia, ce qui est difficile à assurer sur une longue période en particulier dans le cas d'architectures ouvertes telles que rencontrées sur les ordinateurs personnels.

Par conséquent, il est souhaitable de garantir un solide couplage de l'application ou du logiciel d'exploitation du contenu décrypté installé dans l'unité multimédia avec le logiciel ou microprogramme (firmware) du module sécurisé d'accès conditionnel CAM.

### Description sommaire de l'invention

Le but de la présente invention est de forcer la mise à jour de l'application de l'unité multimédia au moyen du module d'accès conditionnel CAM afin de maintenir constamment la dépendance entre l'application et le microprogramme. Autrement dit, une mise à jour du microprogramme du module CAM force une mise à jour de l'application de l'unité multimédia. Il est donc possible de forcer une mise à jour des mécanismes de sécurité de l'unité multimédia par l'intermédiaire des mécanismes de mise à jour de microprogramme du module CAM.

Ce but est atteint par une méthode de mise à jour et de gestion d'une application de traitement de données audiovisuelles incluse dans une unité multimédia, au moyen d'un module d'accès conditionnel en charge de contrôler l'accès aux données audiovisuelles encryptées diffusées dans un flux de transport via un réseau de diffusion et contrôlées par un centre de diffusion et/ou un centre de gestion, tout ou partie des dites données étant retournées par le module d'accès conditionnel et transmises à ladite application de traitement de données audiovisuelles, ledit module d'accès conditionnel utilisant un microprogramme ayant une version courante pour traiter et retourner les données à l'application,
la méthode est caractérisée en ce qu'elle comprend les étapes suivantes:
- réception par le module d'accès conditionnel d'informations de versions maximale disponible et minimale requise du microprogramme du module d'accès conditionnel,
- lecture des informations de version minimale requise et comparaison avec la version courante du microprogramme du module d'accès conditionnel,
- lecture des informations de version maximale disponible et comparaison avec la version courante du microprogramme du module d'accès conditionnel,
- lorsque la comparaison donne un résultat indiquant que la version maximale disponible est supérieure à la version courante du microprogramme chargé sur le module d'accès conditionnel, transmission à l'application d'un message d'invitation de mise à jour du microprogramme et mise à jour dudit microprogramme vers la version maximale disponible ou au moins vers une version supérieure ou égale à la version minimale selon les étapes suivantes.
   a) transmission d'une commande de mise à jour par le module d'accès conditionnel à l'unité multimédia,
   b) réception de la commande de mise à jour par l'unité multimédia et transmission d'une requête de mise à jour au centre de gestion, via un réseau de communication,
   c) téléchargement par l'unité multimédia depuis le centre de gestion de données de mise à jour comprenant d'une part le microprogramme du module d'accès conditionnel et d'autre part des données de mise à jour de l'application de l'unité multimédia,
   d) installation d'une part du microprogramme dans le module d'accès conditionnel, et d'autre part des données de mise à jour de l'application de l'unité multimédia.
- lorsque la comparaison donne un résultat indiquant que la version minimale requise est supérieure à la version courante du microprogramme chargé sur le module d'accès conditionnel, désactivation des fonctions de contrôle d'accès aux données audiovisuelles et transmission à l'application d'un message d'erreur signalant la nécessité d'une mise à jour du microprogramme, selon les étapes a) à d).

L'objectif de la méthode est de contraindre la mise à jour du microprogramme vers la version maximale disponible même si le module d'accès conditionnel peut fonctionner correctement avec un microprogramme de version minimale. Une mise à jour vers la version minimale est en effet impérative pour que le module d'accès conditionnel soit capable d'effectuer les opérations de désembrouillage du flux afin de rendre les contenus diffusés accessibles à un utilisateur de l'unité multimédia par le biais de l'application.

Selon une variante de la méthode, lorsque la version minimale requise est supérieure à la version courante du microprogramme, la mise à jour du microprogramme peut être effectuée directement vers la version maximale disponible. L'étape de comparaison de la version courante avec les versions maximale et minimale donnera ainsi un résultat indiquant que la version courante est supérieure à la version minimale et égale à la version maximale. Par conséquent, aucun message d'invitation à une mise à jour ne sera affiché.

Les informations de version minimale et maximale du microprogramme du module d'accès conditionnel sont insérées soit dans un ou plusieurs message de contrôle ECM ou dans un ou plusieurs messages d'administration des droits EMM, soit dans des tables d'information de services telles que définies par la norme ETSI EN300468, soit dans des messages ou dans des tables spécifiques diffusés dans le flux de transport.

Ces informations de versions sont lues et traitées par le module d'accès conditionnel seul, indépendamment du type de l'unité multimédia et de l'application de traitement de données audiovisuelles installée. L'unité multimédia fonctionne ainsi en tant qu'esclave du module d'accès conditionnel lors des opérations de mises à jour du microprogramme et de l'application.

Ainsi en particulier, l'unité multimédia ne peut être utilisée par un utilisateur malintentionné pour contourner à elle seule les messages de mise à jour diffusés dans le flux de transport : le module d'accès conditionnel lui-même devrait être modifié à cette fin.

Par ailleurs, la mise à jour du microprogramme au moyen d'une demande de l'application au centre de gestion permet accessoirement à ce dernier de contrôler l'authentification de l'application et de l'unité multimédia qui l'héberge lors de cette opération, ce qui permet un contrôle de légitimité supplémentaire.

De plus, l'application est appariée au microprogramme au moyen de clés, algorithmes de sécurité et/ou protocoles de communication spécifiques qui sont typiquement renouvelés lors d'une mise à jour conjointe de la version de l'application et du microprogramme, Cet appariement empêche qu'une application tierce non reconnue, par le diffuseur par exemple, puisse exploiter les données retournées par le module d'accès conditionnel. Inversement, un module d'accès conditionnel provenant d'une seconde unité multimédia ne sera pas reconnu par une application installée dans une première unité avec un premier module ayant un microprogramme de version différente.

### Brève description de la figure

L'invention sera mieux comprise grâce à la description détaillée qui va suivre et qui se réfère à la figure annexée donnée à titre d'exemple nullement limitatif.

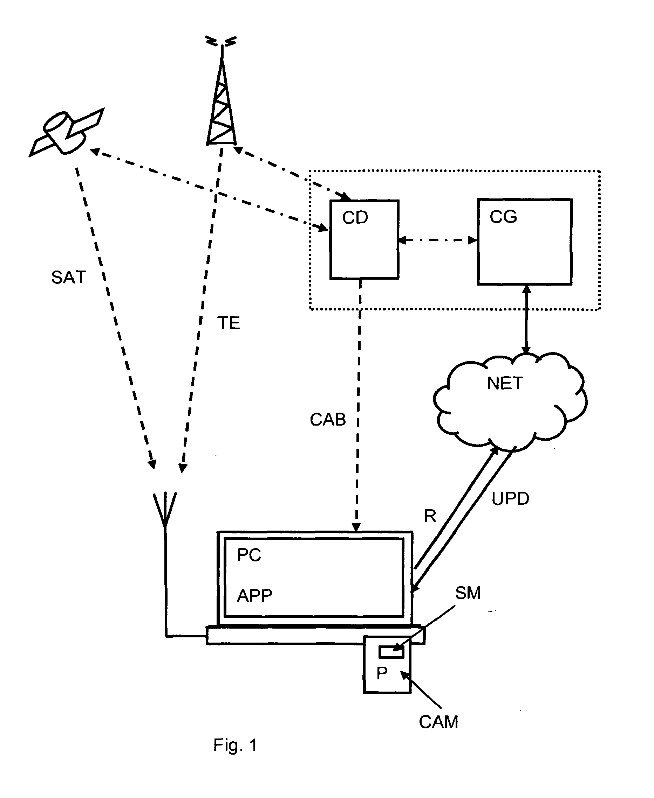

- La figure 1 illustre un schéma bloc d'une unité multimédia équipée d'un module d'accès conditionnel et recevant des données à accès contrôlé diffusées à partir d'un émetteur terrestre, un satellite ou d'un câble. L'unité multimédia est de plus connectée, via un réseau de communication, à un centre de gestion.

### Description détaillée de l'invention

Le système de réception de données de contenus audio vidéo numériques à accès contrôlé de l'exemple de la figure 1 se compose d'une unité multimédia PC sous la forme d'un ordinateur portable ou fixe équipé d'un module d'accès conditionnel CAM incluant un module de sécurité SM. Le module d'accès conditionnel CAM fonctionne grâce à un microprogramme P d'une version courante donnée en association avec une application APP logicielle du type Windows Media Player, Real Player, VLC Media Player etc. installée dans l'ordinateur et apte à présenter à un utilisateur des données de contenus audio vidéo diffusées. Ces données de contenus sont diffusées par des émetteurs terrestres TE et/ou par des satellites SAT et/ou par un câble CAB sous forme de flux de transport FT vers l'unité multimédia équipée de moyens de réception appropriés. Un centre de diffusion CD organise le flux FT en y intégrant les données nécessaires au contrôle d'accès fournies par un centre de gestion CG. Il est à noter que le centre de diffusion CD et le centre de gestion CG peuvent être réunis en une seule et même entité.

Selon une variante, ce flux FT est acheminé dans un réseau de communication du type Internet à large bande et haut débit câblé ou sans fil auquel est connecté l'ordinateur. Ce mode de diffusion est connu sous le nom de WebTV ou IP TV ou télévision par Internet.

Le flux FT contient également des messages d'accès conditionnel comme les messages de contrôle ECM et les messages d'administration des droits d'accès EMM. Selon une variante, à la réception du flux par l'ordinateur PC, l'application APP de visionnement effectue un premier filtrage des données audiovisuelles avant de les transmettre au module d'accès conditionnel CAM qui les désembrouille à l'aide de mots de contrôle décryptés par le module de sécurité SM depuis les messages de contrôle ECM en fonction de droits stockés dans le module de sécurité SM. Les données ainsi traitées sont en général réchiffrées avec une clé de session associée à l'application APP avant d'être retournées à celle-ci pour visionnement.

L'ordinateur PC dispose d'une voie de retour vers un centre de gestion CG via un réseau de communication NET, constitué par un ensemble de serveurs et de bases de données, connecté au centre de diffusion CD. Cette voie permet de transmettre au centre de gestion CG hormis diverses requêtes de mise à jour des logiciels associés à l'ordinateur PC et à ses applications, une requête R de mise à jour du microprogramme P du module d'accès conditionnel CAM. La voie de retour, indépendante des canaux de diffusion du flux, utilise en général le protocole IP (Internet Protocol) pour la transmission des données de l'ordinateur vers le centre de gestion CG.

Le microprogramme P du module CAM est défini ici par un ou plusieurs composants comprenant soit le logiciel de fonctionnement du module CAM, soit une ou des clés, un ou des algorithmes d'encryption / décryption, soit des interfaces, des pilotes et protocoles de communication avec l'application APP installée dans l'ordinateur associée au module CAM et divers autres paramètres, et/ou variables de fonctionnement. Une mise à jour UPD du microprogramme P devient nécessaire lorsque un ou plusieurs de ces composants logiciels changent ou évoluent vers une version améliorée par rapport à la version courante, que ce soit une clé, un algorithme ou un paramètre etc. La motivation de cette mise à jour peut être une amélioration fonctionnelle ou plus généralement sécuritaire.

Le microprogramme P peut contenir également des informations sur le type, la version et des paramètres nécessaires à la compatibilité de l'application avec le module CAM. Un microprogramme P peut contenir une mise à jour complète destinée à remplacer tous les composants formant le microprogramme P courant, soit le microprogramme P peut contenir un ou plusieurs des composants isolés comme par exemple une ou des clés, un ou des algorithmes, un ou des paramètres ou une ou des variables destinés à renouveler seulement le ou les composants correspondant du microprogramme P qui a ou ont évolué.

Lorsqu'une mise à jour UPD du microprogramme P est disponible, le centre de gestion CG introduit des données d'information de version correspondant à la version du microprogramme P atteinte lorsque la mise à jour est effectuée. Elles se composent d'une référence à une version minimale requise pour une réception normale des données du flux de transport établies dans un format lisible par le logiciel du module d'accès conditionnel CAM et d'une référence à une version maximale disponible. Cette dernière version est soit supérieure, soit égale à la version minimale. Dans ce dernier cas, le module d'accès conditionnel cessera de fonctionner jusqu'à ce que la mise à jour soit effective, ce qui impose des contraintes inacceptables dans la plupart des cas en terme de nombre de demandes de mises à jour simultanées à traiter par le centre de gestion ainsi que de cessation de service pour les utilisateurs de l'application. Le décalage entre les versions maximale disponible et minimale requise constituent donc un moyen de réglage à disposition du centre de gestion en fonction de ses contraintes particulières telles que l'étalement dans le temps du nombre de demandes de mise à jour.

Selon une variante de l'invention, un délai de grâce peut être associé à la version minimale afin d'éviter la surcharge des demandes de mise à jour lorsque la version minimale transmise est supérieure à la version courante de nombreux modules d'accès conditionnel. Ce délai de grâce peut prendre la forme d'une durée relative à la réception du message par le module d'accès conditionnel, ou la forme d'une date et/ou heure fixe. Ce délai de grâce peut être préprogrammé dans la version courante du microprogramme ou être transmis par un message télédiffusé conjointement aux données d'information de version.

Les données d'information de version peuvent être transmises soit dans des messages spécifiques M de mise à jour soit dans les messages de contrôle ECM ou d'administration EMM diffusés dans le flux des données à accès contrôlé selon les normes DVB, voir par exemple le document "Functional model of a conditional access system", EBU Project Group B/CA.

Elles peuvent également être transmises dans des tables d'information de services telles que définies par la norme ETSI EN300468. Ce document intitulé Digital Video Broadcasting (DVB); Specification for Service Information (SI) in DVB Systems publié par l'ETSI décrit la structure des informations de services SI. La norme ISO/IEC 13818-1 MPEG-2 "Information technology - Generic coding of moving pictures and associated audio information: Systems" définit les informations spécifiques de programmes PSI (Program Specific Information).

Les données PSI permettent de configurer le module d'accès conditionnel CAM associé à l'application APP de l'unité multimédia PC de manière automatique pour démultiplexer et décoder les différents programmes et services du flux de transport FT.

Ces données PSI sont structurées en quatre types de tables qui sont transmises par sections, à savoir.
1) La table d'association de programmes (PAT) Program Association Table:
   Elle indique pour chaque service du multiplex la localisation c'est-à-dire les valeurs des identificateurs de paquets PID (Packet Identifier) des paquets du flux de transport de la table d'organisation des programmes PMT (Program Map Table) correspondante. Elle fournit également la localisation de la table d'information réseau NIT (Network information Table).
2) La table d'accès conditionnel CAT (Conditional Access Table)
   Elle fournit des informations propres aux systèmes d'accès conditionnel utilisés dans le multiplex comprenant la localisation du flux de messages d'administration EMM (Entitlement Management Message).
3) La table d'organisation des programmes PMT (Program Map Table)
   Elle identifie et indique les localisations des flux constituant chaque service et la localisation des champs de référence d'horloge de programme pour un service.
4) La table d'information réseau NIT (Network Information Table)
   Sa localisation est définie selon la norme ISO/IEC 13818-1 MPEG-2, le format des données n'étant pas compris dans cette norme. Elle fournit des informations sur le réseau physique comme la désignation des émetteurs (hertziens ou satellitaires) permettant de retrouver d'autres flux de transport sur le réseau.

Les informations spécifiques de programmes PSI sont complétées par des données permettant à l'utilisateur d'identifier les services et les événements transportés dans un multiplex ou dans un réseau. Ces données sont réparties dans des tables telles que:
- La table d'association de bouquets BAT (Bouquet Association Table) fournissant outre le nom du bouquet (ensemble de programmes ou de services mis à disposition d'utilisateurs par un diffuseur), la liste des services disponibles dans chaque bouquet. Cette table est facultative.
- La table de description de service SDT (Service Description Table) contenant des données décrivant les services comme les noms et les fournisseurs des services.

Les informations sur les contenus des programmes figurent dans les tables d'information sur les événements EIT (Event Information Table) qui se réfèrent à chaque service à partir de son identification selon la norme DVB. Ces informations décrivent les différentes émissions en proposant des informations semblables à celles que l'on trouve dans un magazine traditionnel de programmes TV.

Les tables mentionnées ci-dessus comportent chacune au moins une section réservée à des données supplémentaires que le diffuseur peut introduire soit en l'occurrence les informations de version minimale et maximale du microprogramme P du module CAM.

Pour des raisons de sécurité, l'intégrité de ces informations de version, quel que soit leur mode de transmission c'est-à-dire par message de contrôle ECM, d'administration EMM, message spécifique ou par tables d'information de service, doit être vérifiée par le module d'accès conditionnel CAM. Afin d'empêcher leur modification par l'application APP ou par un autre logiciel installé dans l'unité multimédia, elles sont de préférence accompagnées de leur signature constituée par une empreinte des informations obtenue à l'aide d'une fonction mathématique de hachage unidirectionnelle et chiffrée par une clé connue du module CAM ou du module de sécurité SM.

Selon une variante, ces informations de version sont encryptées au moyen d'une clé connue du module CAM ou du module de sécurité SM.

Après lecture des informations de version, le module d'accès conditionnel CAM compare d'abord sa version courante avec la référence de la version minimale du microprogramme P capable d'assurer la décryption des données du flux de transport.

En cas de différence mise en évidence par une version courante inférieure à la version minimale lue, les fonctions de contrôle d'accès aux données audiovisuelles du module d'accès conditionnel CAM sont désactivées rendant le module CAM inapte à décrypter les données du flux. Le module CAM transmet alors un message d'erreur à l'application APP qui l'affiche sur l'écran de l'unité multimédia et avertissant l'utilisateur de la nécessité d'une mise à jour du microprogramme P. Une commande est également transmise à l'unité multimédia PC qui se charge d'envoyer, via le réseau de communication NET, une requête R de téléchargement de mise à jour au centre de gestion CG. Ce dernier transmet à l'unité multimédia PC, après vérification de la requête R, les données de mise à jour UPD de préférence sous forme encryptées avec une clé connue du module CAM ou du module de sécurité SM et signées. L'encryption et la signature servent à prévenir tout remplacement abusif du microprogramme P par téléchargement depuis un serveur tiers non reconnu par le diffuseur.

Le téléchargement de la mise à jour du microprogramme P peut s'effectuer soit manuellement par transmission d'une commande, par exemple, sous forme d'un click sur un bouton approprié en réponse au message affiché sur un écran solidaire de l'unité multimédia, soit entièrement automatiquement, sans intervention de l'utilisateur, dès la réception de la commande par l'unité multimédia.

Dès la fin du téléchargement, l'installation de la mise à jour du microprogramme P se déroule simultanément d'une part dans le module d'accès conditionnel CAM et d'autre part dans l'application APP de l'unité multimédia PC. Ce processus d'installation, comme celui du téléchargement, peut également s'effectuer manuellement sur commande ou automatiquement.

Après l'étape d'installation de la mise à jour du microprogramme P dans le module d'accès conditionnel CAM et des données issues du microprogramme P servant à mettre à jour l'application APP dans l'unité multimédia PC, les fonctions de contrôle d'accès aux données audiovisuelles du microprogramme P du module d'accès conditionnel CAM sont réactivées. La mise à jour du microprogramme P courant est alors effectuée au moins vers une version minimale.

La mise à jour du microprogramme P du module d'accès conditionnel CAM et les données de mise à jour de l'application APP de l'unité multimédia PC comprennent un protocole de communication sécurisée entre le module d'accès conditionnel CAM et l'application APP utilisant un algorithme et des clés de chiffrement et/ou une mise à jour de clés d'appariement du microprogramme P avec l'application APP.

L'appariement est, par exemple, effectué selon le mécanisme décrit dans le document EP1078524B1 dans lequel les données échangées entre le microprogramme P du module CAM et l'application APP sont chiffrées par une clé unique d'appariement stockée d'une part dans le module CAM et d'autre part dans l'unité multimédia PC.

Le microprogramme P du module d'accès conditionnel CAM est apparié à l'application APP de l'unité de multimédia PC de manière à assurer un fonctionnement conjoint des deux parties seulement avec les versions préalablement installées.

Il n'est donc pas possible de mettre à jour le module CAM indépendamment de l'application APP et inversement. Dans le cas où cette installation des mises à jour ne peut pas être effectuée de manière synchrone dans l'unité multimédia PC et dans le module d'accès conditionnel CAM, l'unité multimédia PC ou plutôt l'application APP ne sera pas réactivée donc incapable d'exploiter les données du flux de la manière attendue. La méthode selon l'invention assure ainsi une évolution en parallèle des deux parties du microprogramme P tout en empêchant qu'une application quelconque et non reconnue puisse décrypter les données du flux diffusé.

Les informations de version contiennent, en sus de la référence à la version minimale requise, une référence à une version maximale du microprogramme P qu'il serait avantageux de charger dans le module CAM. Lorsque cette version maximale est supérieure aux versions courante et minimale, un message est affiché sur l'écran de l'unité multimédia incitant l'utilisateur à un téléchargement ultérieur de la nouvelle version. Cette dernière n'est pas absolument nécessaire à un fonctionnement correct de l'ensemble formé par l'application de l'unité multimédia et du module d'accès conditionnel CAM. La version maximale peut aussi bien correspondre à une version supérieure à la version minimale fournissant des fonctionnalités supplémentaires qu'à la dernière version disponible du microprogramme P. Dans cas, le module CAM reste activé contrairement au cas où la version courante est détectée comme étant inférieure à la version minimale.

Selon une variante, afin d'encourager les utilisateurs à charger la version maximale, et lorsque celle-ci est supérieure aux versions courante et minimale, le fonctionnement de l'ensemble application - module d'accès conditionnel CAM peut être altéré ou limité à la décryption d'un nombre restreint de canaux audio/vidéo du flux de transport.

La méthode selon l'invention permet donc une mise à jour du microprogramme en deux temps lorsque la version courante est inférieure aux versions minimale et maximale. Contrairement à l'obligation de la mise à jour à la version minimale, la mise à jour à la version maximale est recommandable. Ainsi, une unité multimédia équipée avec un module CAM de version minimale peut fonctionner pendant un certain temps sans connexion au réseau de communication NET délivrant les mises à jour même si les informations de version indiquent la disponibilité d'une version maximale.

Cette période de fonctionnement minimal peut être terminée soit par l'utilisateur en répondant au message d'invitation de mise à jour après connexion de l'unité multimédia au réseau de communication NET, soit par le diffuseur. Ce dernier remplace, dans les informations de version, la référence à la version minimale par la référence à la version maximale. Cette opération permet au diffuseur de désactiver les modules CAM dont le microprogramme n'est pas à la version maximale disponible. Ainsi une mise à jour à la version maximale devient impérative car la version courante est inférieure à la version minimale qui correspond dans ce cas à la version maximale que le diffuseur désire imposer.

## Revendications

1. Méthode de mise à jour et de gestion d'une application APP de traitement de données audiovisuelles incluse dans une unité multimédia PC, au moyen d'un module d'accès conditionnel CAM en charge de contrôler l'accès aux données audiovisuelles encryptées diffusées dans un flux de transport FT via un réseau de diffusion et contrôlées par un centre de diffusion CD et/ou un centre de gestion CG, tout ou partie des dites données étant retournées par le module d'accès conditionnel CAM et transmises à ladite application APP de traitement de données audiovisuelles, ledit module d'accès conditionnel CAM utilisant un microprogramme P ayant une version courante pour traiter et retourner les données à l'application APP,
la méthode est **caractérisée en ce qu'**elle comprend les étapes suivantes:
- réception par le module d'accès conditionnel CAM d'informations de versions maximale disponible et minimale requise du microprogramme P du module d'accès conditionnel CAM,
- lecture des informations de version minimale requise et comparaison avec la version courante du microprogramme P du module d'accès conditionnel CAM,
- lecture des informations de version maximale disponible et comparaison avec la version courante du microprogramme P du module d'accès conditionnel CAM,
- lorsque la comparaison donne un résultat indiquant que la version maximale disponible est supérieure à la version courante du microprogramme P chargé sur le module d'accès conditionnel CAM, transmission à l'application APP d'un message d'invitation de mise à jour du microprogramme P et mise à jour dudit microprogramme P vers la version maximale disponible ou au moins vers une version supérieure ou égale à la version minimale selon les étapes suivantes.
a) transmission d'une commande de mise à jour par le module d'accès conditionnel CAM à l'unité multimédia PC,
b) réception de la commande de mise à jour par l'unité multimédia PC et transmission d'une requête R de mise à jour au centre de gestion CG, via un réseau de communication NET,
c) téléchargement par l'unité multimédia PC depuis le centre de gestion CG de données de mise à jour UPD comprenant d'une part le microprogramme P du module d'accès conditionnel CAM et d'autre part des données de mise à jour de l'application APP de l'unité multimédia PC,
d) installation d'une part du microprogramme P dans le module d'accès conditionnel CAM, et d'autre part des données de mise à jour de l'application APP de l'unité multimédia PC.
- lorsque la comparaison donne un résultat indiquant que la version minimale requise est supérieure à la version courante du microprogramme P chargé sur le module d'accès conditionnel CAM, désactivation des fonctions de contrôle d'accès aux données audiovisuelles et transmission à l'application APP d'un message d'erreur signalant la nécessité d'une mise à jour du microprogramme P, selon les étapes a) à d).

2. Méthode selon la revendication 1 **caractérisée en ce que** la mise à jour du microprogramme P du module d'accès conditionnel CAM et les données de mise à jour de l'application APP de l'unité multimédia PC sont appariées de sorte que la mise à jour du module d'accès conditionnel CAM nécessite la mise à jour de l'application APP pour traiter et retourner les données à l'application APP.

3. Méthode selon la revendication 1 **caractérisée en ce que** les fonctions de contrôle d'accès aux données audiovisuelles du microprogramme P du module d'accès conditionnel CAM sont réactivées après l'étape d'installation de la mise à jour du microprogramme P dans le module d'accès conditionnel CAM et des données de mise à jour de l'application APP dans l'unité multimédia PC, la mise à jour du microprogramme P courant étant effectuée au moins vers une version minimale.

4. Méthode selon la revendication 2 **caractérisée en ce que** la mise à jour du microprogramme P du module d'accès conditionnel CAM et les données de mise à jour de l'application APP de l'unité multimédia PC comprennent un protocole de communication sécurisée entre le module d'accès conditionnel CAM et l'application APP utilisant un algorithme et des clés de chiffrement et/ou une mise à jour de clés d'appariement du microprogramme P avec l'application APP.

5. Méthode selon la revendication 1 **caractérisée en ce que** les informations de versions maximale disponible et minimale requise du microprogramme P sont transmises dans un ou plusieurs messages de contrôle ECM ou dans un ou plusieurs messages d'administration EMM, lesdits messages étant acheminés vers le module d'accès conditionnel CAM.

6. Méthode selon la revendication 1 **caractérisée en ce que** les informations de version du microprogramme P sont transmises, dans des sections réservées au diffuseur dans une ou plusieurs tables d'information de services telles que définies par la norme ETSI EN300468, lesdites tables étant acheminées vers le module d'accès conditionnel CAM.

7. Méthode selon les revendications 1 à 6 **caractérisée en ce que** les informations de version du microprogramme P sont transmises sous forme signée avec une clé connue du module d'accès conditionnel CAM.

8. Méthode selon les revendications 1 à 6 **caractérisée en ce que** les informations de version du microprogramme P sont transmises sous forme chiffrée avec une clé connue du module d'accès conditionnel CAM.

9. Méthode selon la revendication 1 **caractérisée en ce que** le flux de données audiovisuelles encryptées est filtré par un module de réception externe ou intégré à l'unité multimédia avant le traitement par le module d'accès conditionnel CAM.

10. Méthode selon la revendication 1 **caractérisée en ce que** le flux de données audiovisuelles encryptées est filtré et traité par le module d'accès conditionnel CAM.

11. Méthode selon la revendication 1 **caractérisée en ce que** les opérations de téléchargement et d'installation de la mise à jour du microprogramme P sont effectuées manuellement à l'aide de commandes transmises par un utilisateur à l'unité multimédia PC en réponse aux messages d'erreur et d'invitation transmis par le module d'accès conditionnel CAM.

12. Méthode selon la revendication 1 **caractérisée en ce que** les opérations de téléchargement et d'installation de la mise à jour du microprogramme P sont effectuées automatiquement sans l'intervention d'un utilisateur.

## Claims

1. Method for updating and managing an audiovisual data processing application APP included in a multimedia unit PC, by means of a conditional access module CAM controlling the access to the encrypted audiovisual data broadcast in a transport stream FT via a broadcast network and controlled by a broadcast center CD and/or a management center CG, all or part of said data being returned by the conditional access module CAM and transmitted to said audiovisual data processing application APP, said conditional access module CAM using a firmware P having a current version for processing and returning the data to the application APP,
the method is **characterized in that** it comprises the following steps:
- receiving by the conditional access module CAM information on the maximum available and the minimum required versions of the conditional access module CAM firmware P,
- reading the information on the minimum version required and comparing with the current version of the conditional access module CAM firmware P,
- reading the information from the maximum version available and comparing with the current version of conditional access module CAM firmware P,
- when the comparison gives a result indicating that the maximum available version is superior to the current version of the firmware P loaded in the conditional access module CAM, transmitting to the application APP an invitation message for updating the firmware,
- updating of said firmware P to the maximum available version or at least to a version higher or equal to the minimum version according to the following steps.
a) transmitting an updating command by the conditional access module CAM to the multimedia unit PC,
b) receiving the updating command by the multimedia unit PC and transmitting an updating request to the management center CG, via a communication network NET,
c) downloading from the management center CG by the multimedia unit PC the updating data UPD comprising the conditional access module CAM firmware P and the updating data for the multimedia unit PC application APP,
d) installing the conditional access module CAM firmware P, and the updating data UPD for the multimedia unit PC application APP.
- when the comparison gives a result indicating that the minimum version required is superior to the current version of the firmware P loaded in the conditional access module CAM, deactivation of the audiovisual data access control functions and transmitting to the application APP an error message reporting the necessity of updating the firmware P, according to steps a) to d).

2. Method according to claim 1, **characterized in that** the updating of the firmware P of the conditional access CAM module and the updating data for the APP application of the multimedia unit PC are matched in such a way that the updating of the conditional access CAM module needs the updating of the APP application for processing and returning the data to the application APP.

3. Method according to claim 1, **characterized in that** the audiovisual data access control functions of the firmware P of the conditional access CAM module are reactivated after the installation step of the firmware P updating in the conditional access module CAM and of updating the data of the application APP in the multimedia unit PC, the updating of the current firmware P being carried out at least to a minimum version.

4. Method according to claim 2, **characterized in that** the updating of the conditional access module CAM firmware P and the updating data for the application APP of the multimedia unit PC comprise a secured communication protocol between the conditional access module CAM and the application APP using an algorithm and encryption keys and/or an update of keys for matching the firmware P with the application APP.

5. Method according to claim 1, **characterized in that** the maximum available and required minimum versions information of the firmware P are transmitted in one or several ECM control messages or in one or several EMM administration messages, said messages being forwarded to the conditional access module CAM.

6. Method according to claim 1, **characterized in that** the version information of the firmware P is transmitted in sections reserved to the broadcaster in one or several service information tables such as defined by the standard ETSI EN300468, said tables being forwarded to the conditional access module CAM

7. Method according to claims 1 to 6, **characterized in that** the version information of the firmware P is transmitted signed with a key known by the conditional access module CAM

8. Method according to claims 1 to 6, **characterized in that** the version information of the firmware P is transmitted ciphered with a key known by the conditional access module CAM.

9. Method according to claim 1, **characterized in that** the stream of encrypted audiovisual data is filtered by an external reception module or by a module integrated to the multimedia unit before processing by the conditional access module CAM.

10. Method according to claim 1, **characterized in that** the stream of encrypted audiovisual data is filtered and processed by the conditional access module CAM.

11. Method according to claim 1, **characterized in that** the operations of downloading and installation of the firmware P updating are carried out manually by means of commands transmitted by a user to the multimedia unit PC in response to error and invitation messages transmitted by the conditional access module CAM.

12. Method according to claim 1, **characterized in that** the operations of downloading and installation of the firmware P updating are carried out automatically without any user intervention.

## Patentansprüche

1. Verfahren zum Aktualisieren und zum Verwalten einer Anwendung APP zum Verarbeiten von audiovisuellen Daten, die in einer Multimediaeinheit PC vorhanden sind, mittels eines Moduls für bedingten Zugriff CAM, das dazu bestimmt ist, den Zugriff auf die verschlüsselten audiovisuellen Daten zu kontrollieren, die in einem Transportstrom FT über ein Verbreitungsnetzwerk verbreitet sowie durch eine Verbreitungszentrale CD und/oder eine Verwaltungszentrale CG kontrolliert werden, wobei die gesamten oder ein Teil der Daten durch das Modul für bedingten Zugriff CAM aufgegriffen und an die Anwendung APP zum Verarbeiten audiovisueller Daten weitergeleitet werden, wobei das Modul für bedingten Zugriff CAM ein Mikroprogramm P verwendet, das eine laufende Version hat, um die Daten zu verarbeiten und an die Anwendung APP zurückzusenden,
wobei das Verfahren **dadurch gekennzeichnet ist, dass** es die folgenden Schritte aufweist:
- Empfang von Informationen zu der höchsten verfügbaren und niedrigsten erforderlichen Version des Mikroprogrammes P des Moduls für bedingten Zugriff CAM durch das Modul für bedingten Zugriff CAM,
- Lesen der Informationen zu der niedrigsten erforderlichen Version und Vergleich mit der laufenden Version des Mikroprogrammes P des Moduls für bedingten Zugriff CAM,
- Lesen der Informationen zu der höchsten verfügbaren Version und Vergleich der laufenden Version des Mikroprogrammes P des Moduls für bedingten Zugriff CAM,
- falls der Vergleich zu einem Resultat führt, dass die höchste verfügbare Version höher als die laufende Version des Mikroprogrammes P ist, das in dem Modul für bedingten Zugriff CAM geladen ist, Übermitteln einer Aufforderungsnachricht an die Anwendung APP zum Aktualisieren des Mikroprogrammes P und Aktualisieren des Mikroprogrammes P auf die höchste verfügbare Version oder wenigstens auf eine höhere oder gleiche niedrigste Version entsprechend den nachfolgenden Schritten
a) Übermitteln eines Aktualisierungsbefehls durch das Modul für bedingten Zugriff CAM an die Multimediaeinheit PC,
b) Empfang des Aktualisierungsbefehls durch die Multimediaeinheit PC und Übermitteln einer Aktualisierungsanfrage R an das Verwaltungszentrum CG über ein Kommunikationsnetzwerk NET,
c) Herunterladen der Aktualisierungsdaten UPD von der Verwaltungseinheit CG durch die Multimediaeinheit PC, die zum Einen das Mikroprogramm P des Moduls für bedingten Zugriff CAM und zum Anderen Aktualisierungsdaten der Anwendung APP der Multimediaeinheit PC umfassen,
d) Installieren zum Einen des Mikroprogrammes P in dem Modul für bedingten Zugriff CAM und zum Anderen von Aktualisierungsdaten der Anwendung APP der Multimediaeinheit PC,
- wenn der Vergleich zu dem Resultat führt, dass die niedrigste erforderliche Version höher als die laufende Version des Mikroprogrammes P ist, das in dem Modul für bedingten Zugriff CAM geladen ist, Abschalten der Funktionen zur Zugriffskontrolle auf die audiovisuellen Daten und Übermitteln einer Fehlermeldung an die Anwendung APP, die das Erfordernis einer Aktualisierung des Mikroprogrammes P gemäß den Schritten a) bis d) angibt.

2. Verfahren nach Anspruch 1, **dadurch gekennzeichnet, dass** das Aktualisieren des Mikroprogrammes P des Moduls für bedingten Zugriff CAM und die Aktualisierungsdaten der Anwendung APP der Multimediaeinheit PC in dem Sinne gekoppelt sind, dass das Aktualisieren des Moduls für bedingten Zugriff CAM das Aktualisieren der Anwendung APP erfordert, um die Daten an die Anwendung APP zu verarbeiten und bereitzustellen.

3. Verfahren nach Anspruch 1, **dadurch gekennzeichnet, dass** die Funktionen zur Zugriffskontrolle auf die audiovisuellen Daten des Mikroprogrammes P des Moduls für bedingten Zugriff CAM nach dem Schritt des Installierens einer Aktualisierung des Mikroprogrammes P in dem Modul für bedingten Zugriff CAM und der Aktualisierungsdaten der Anwendung APP in der Multimediaeinheit PC reaktiviert werden, wobei das Aktualisieren des laufenden Mikroprogrammes P wenigstens auf eine Minimalversion durchgeführt worden ist.

4. Verfahren nach Anspruch 2, **dadurch gekennzeichnet, dass** das Aktualisieren des Mikroprogrammes P des Moduls für bedingten Zugriff CAM und die Aktualisierungsdaten der Anwendung APP der Multimediaeinheit PC ein abgesichertes Kommunikationsprotokoll zwischen dem Modul für bedingten Zugriff CAM und der Anwendung APP umfassen, das einen Algorithmus und Chiffrierschlüssel und/oder ein Aktualisieren von Paarschlüsseln des Mikroprogrammes P mit der Anwendung APP verwendet.

5. Verfahren nach Anspruch 1, **dadurch gekennzeichnet, dass** die Informationen zu der höchsten verfügbaren Version und der niedrigsten erforderlichen Version des Mikroprogrammes P in einer oder mehrerer Kontrollnachrichten ECM oder in einer oder mehrerer Verwaltungsnachrichten EMM übermittelt werden, wobei die Nachrichten zu dem Modul für bedingten Zugriff CAM versendet werden.

6. Verfahren nach Anspruch 1, **dadurch gekennzeichnet, dass** die Informationen zu der Version des Mikroprogrammes P in einer oder mehrerer Serviceinformationstabellen wie in der Norm ETSI EN300468 angegeben in reservierten Bereichen des Senders übermittelt werden, wobei die Tabellen zu dem Modul für bedingten Zugriff CAM übermittelt werden.

7. Verfahren nach einem der Ansprüche 1 bis 6, **dadurch gekennzeichnet, dass** die Informationen zu der Version des Mikroprogrammes P mit einem Schlüssel signiert übermittelt werden, der dem Modul für bedingten Zugriff CAM bekannt ist.

8. Verfahren nach einem der Ansprüche 1 bis 6, **dadurch gekennzeichnet, dass** die Informationen zu der Version des Mikroprogrammes P mit einem Schlüssel chiffriert übermittelt werden, der dem Modul für bedingten Zugriff CAM bekannt ist.

9. Verfahren nach Anspruch 1, **dadurch gekennzeichnet, dass** der Strom an verschlüsselten audiovisuellen Daten durch ein externes oder in der Multimediaeinheit integriertes Empfangsmodul vor dem Verarbeiten durch das Modul für bedingten Zugriff CAM gefiltert werden.

10. Verfahren nach Anspruch 1, **dadurch gekennzeichnet, dass** der Strom an verschlüsselten audiovisuellen Daten durch das Modul für bedingten Zugriff CAM gefiltert und verarbeitet wird.

11. Verfahren nach Anspruch 1, **dadurch gekennzeichnet, dass** die Vorgänge des Herunterladens und Installierens der Aktualisierung des Mikroprogrammes P manuell mit Hilfe von Befehlen durchgeführt werden, die durch einen Nutzer an die Multimediaeinheit PC als Antwort auf Fehlermeldungen und Aufforderungen übermittelt werden, die durch das Modul für bedingten Zugriff CAM übermittelt werden.

12. Verfahren nach Anspruch 1, **dadurch gekennzeichnet, dass** die Vorgänge des Herunterladens und des Installierens der Aktualisierung des Mikroprogrammes P automatisch ohne Intervention eines Nutzers durchgeführt werden.
